# EUROPÄISCHE PATENTSCHRIFT

(11) **EP 1 726 020 B1**
(45) Veröffentlichungstag und Bekanntmachung des Hinweises auf die Patenterteilung: **05.05.2010**
(21) Anmeldenummer: 05716011.1
(22) Anmeldetag: 12.03.2005
(51) Int. Cl.: H01F 7/18, F16K 31/00

(54) **SCHNELL AUSLÖSENDES VENTIL**
QUICK-OPERATING VALVE
SOUPAPE A OUVERTURE RAPIDE

(30) Priorität: 17.03.2004 DE 202004004156 U
(43) Veröffentlichungstag der Anmeldung: 29.11.2006
(73) Patentinhaber: Erben Kammerer KG, 51469 Bergisch Gladbach (DE)
(72) Erfinder: ADAMS, Hans, 51377 Leverkusen (DE); KAMMERER, Bernd, 51429 Bergisch Gladbach (DE)
(74) Vertreter: von Kreisler Selting Werner
(86) Internationale Anmeldenummer: PCT/EP2005/002661
(87) Internationale Veröffentlichungsnummer: WO 2005/093764

(56) Entgegenhaltungen:
- DE-A1- 19 725 317
- US-A- 4 051 545
- US-A- 4 661 883
- US-A- 5 345 119

## Beschreibung

Die Erfindung betrifft ein schnell auslösendes Ventil, das eine von einer Spannungsquelle gespeiste Spule aufweist.

Bei Schiebern zum Absperren von Rohrleitungen, welche Fluide führen, erfolgt die Betätigung in der Regel durch ein schnell auslösendes Schaltventil fluidisch, d.h. hydraulisch oder pneumatisch. Bei den Fluiden kann es sich um Gase, Flüssigkeiten, Feststoffe oder auch um Mehrphasensysteme handeln. Das Schaltventil ist in einer zu einem Aktuator des Schiebers führenden Fluidleitung vorhanden und wird elektrisch betätigt.

Schiebersysteme benötigen häufig eine Schnellschluss-Funktion. Im Falle eines Stromausfalls oder einer anderweitigen Störung muss der Schieber unverzüglich in die Schließstellung gebracht werden. Bei einem fluidisch betätigten Schieber bedeutet dies, dass der Fluiddruck unverzüglich entlastet oder beaufschlagt werden muss.

In sicherheitstechnischen Anwendungen, wie bei Explosions- oder Schnellschluss-Schiebern wird ein elektrisch angesteuertes Entlastungsventil mittels eines Stromes durch einen Elektromagneten geschlossen gehalten. Bei Fortfall des Stromes wird das Schaltventil zwangsweise durch Federn und/oder den anstehenden Druck des Mediums geöffnet. Somit ist sichergestellt, dass bei einem Stromausfall das Schaltventil öffnet, was wiederum zur Folge hat, dass der Schieber in den Sperrzustand bewegt wird. Das Schaltventil kann jedoch erst öffnen, wenn bei dem Elektromagneten, der es im Schließzustand gehalten hat; das Magnetfeld so weit abgebaut ist, dass die magnetische Haltekraft unter einen Grenzwert abgesunken ist. Die Zeit, in der die magnetische Flussdichte des Elektromagneten bzw. der Spulenstrom als Maß der magnetischen Feldstärke ausreichend abgebaut wird, bestimmt wesentlich die Öffnungszeit des Schaltventils. Die Richtlinien erfordern in bestimmten Fällen eine Schließzeit des Schiebers von 30 ms. Infolge der Induktivität der Spule des Schaltventils beträgt die Schließzeit in der Praxis bei einem gemessenen Fall 1,3 s.

Der Oberbegriff des Patentanspruchs 1 geht aus von einem schnell auslösenden Ventil, das aus DE 197 25 317 A1 bekannt ist. Das bekannte Ventil weist eine Steuereinheit auf, die das Anliegend von Gleichspannung detektiert und in Abhängigkeit davon wird ein Schaltmittel in Form eines Mosfet geschlossen. Parallel zu der Spule des gesteuerten Ventils liegt eine Hilfsspannungsquelle, die als spannungsabhängiger Widerstand bezeichnet ist. Die Steuerschaltung schaltet in Abhängigkeit von einer Abschalt-Induktionsspannung der Spule diese kurz.

U.S. 5,345,119 beschreibt die Steuerung der Grenzfrequenz eines Filters mit variablen Widerständen und variablen Kondensatoren. Der variable Widerstand besteht aus einer Reihenschaltung mehrerer Einzelwiderstände, die jeweils durch einen elektronischen Schalter überbrückt werden können.

Der Erfindung liegt die Aufgabe zugrunde, ein schnell auslösendes Ventil zu schaffen, bei dem der spannungsabhängige Widerstand im Falle des Ausfalls eines von mehreren elektronischen Schaltern eine Abschaltung des Schaltventils bewirkt.

Das schnell auslösende Ventil der vorliegenden Erfindung ist durch den Anspruch 1 definiert. Erfingdungsgemäß enthält der spannungsabhängige Widerstand mehrere kaskadenartig in Reihe geschaltete elektronische Schalter, die jeweils einen Serienwiderstand überbrücken und in den Sperrzustand gesteuert werden, wenn die anliegende Spannung eine vorgegebene Schaltspannung unterschreitet.

Bei dem erfindungsgemäßen schnell auslösenden Ventil folgt keine Abschaltung des Erregerstroms, der die Spule des Schaltventils durchfließt, sondern eine Absenkung der Spannung der Spannungsquelle in Kombination mit einer entsprechenden Erhöhung des spannungsabhängigen Widerstandes. Der spannungsabhängige Widerstand hat unterhalb einer Schaltspannung Uₛ einen hohen Widerstand und oberhalb von Uₛ einen vernachlässigbar kleinen Widerstand. Parallel zu der Spule liegt eine Hilfsspannungsquelle, die vorzugsweise stromgesteuert ist und deren Spannung während des Ausschaltvorgangs dem Spulenstrom entgegenwirkt. Im Betriebszustand liegt eine so große Eingangsspannung an, dass der spannungsabhängige Widerstand niederohmig ist. Im Ausschaltvorgang unterschreitet die Eingangsspannung die Schaltspannung Uₛ. Der spannungsabhängige Widerstand wird damit hochohmig. Der überwiegende Teil des Stroms wird nun über die Hilfsspannungsquelle geführt, so dass die Spule sich über die niederohmige Hilfsspannungsquelle schnell entladen kann. Damit sind die Spannungen und Zeiten zum Abschalten des Stromes vorhersehbar und berechenbar. Es ergeben sich somit definierte und kurze Öffnungszeiten des Sicherheitsventils.

Nach der Erfindung ist vorgesehen, dass der spannungsabhängige Widerstand mehrere kaskadenartig in Reihe geschaltete elektronische Schalter enthält, die jeweils einen Serienwiderstand überbrücken und in den Sperrzustand gesteuert werden, wenn die anliegende Spannung eine vorgegebene Schaltspannung Uₛ unterschreitet. Die Aufteilung in mehrere serielle elektronische Schalter hat den Vorteil, dass bei Ausfall mindestens eines elektronischen Schalters der spannungsabhängige Widerstand hoch wird, was zu einer Abschaltung des Schaltventils fuhrt. Die elektronischen Schaltern sind mit Steuerschaltern in der Weise verknüpft, dass sie dann, wenn die Eingangsspannung die Schaltspannung Uₛ unterschreitet, in den Sperrzustand geschaltet werden. Die Höhe der Schaltspannung Uₛ wird durch eine Referenzspannungsstrecke bestimmt, die mehrere Konstahtspannungselemente, z.B. Zenerdioden, enthält.

Bei einer bevorzugten Aüsgestaltung der Erfindung ist vorgesehen, dass die Hilfsspannungsquelle aus mindestens einer Zenerdiode besteht. Die Zenerdiode ermöglicht einen schnellen und kontrollierten Abfluss des Spulenstroms, der über die Zenerdiode kurzgeschlossen wird und nicht über den spannungsabhängigen Widerstand fließen muss. Vorzugsweise ist die Zenerdiode mit einer Gleichrichterdiode in Reihe geschaltet, welche für den Stromfluss von der Spannungsquelle über die Zenerdiode undurchlässig ist und diesen somit sperrt. Die Gleichrichterdiode ist nur für den Entladestrom der Spule durchlässig.

Im Folgenden wird ein Ausführungsbeispiel der Erfindung unter Bezugnahme auf die Zeichnungen näher erläutert. Diese Beschreibung eines detaillierten Ausführungsbeispiels ist nicht dahingehend zu verstehen, dass sie den Schutzbereich der Erfindung einschränkt. Dieser wird vielmehr durch die Ansprüche bestimmt.

Es zeigen:
- Fig. 1: eine schematische Darstellung eines gesamten Schiebersystems, einschließlich des Schiebers und des schnell ;auslösenden Ventils,
- Fig. 2: ein schematisches Schaltbild der Steuerschaltung des Ventils, und
- Fig. 3: eine detaillierte Darstellung des Bereichs III der Schaltung nach Figur 2.

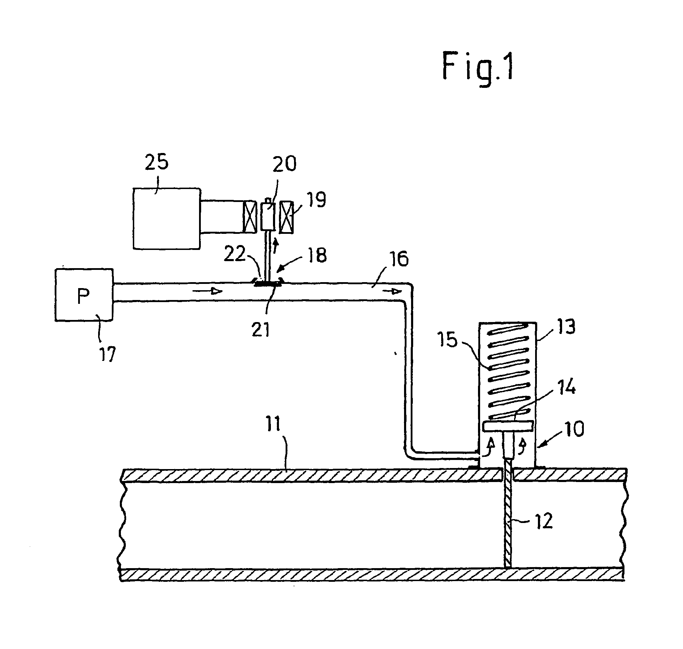

Figur 1 zeigt einen Schieber 10, der im Zuge einer Rohrleitung 11 angeordnet ist und eine bewegbare Schieberplatte 12 aufweist, welche den Rohrquerschnitt versperren kann. Der Schieber 10 weist einen Aktuator 13 auf, der bei dem vorliegenden Ausführungsbeispiel pneumatisch betätigt wird. Der Aktuator 13 besteht aus einem Zylinder, der einen Kolben 14 enthält. Der Schieber. 10 ist mit dem Kolben 14 verbunden. Der Kolben 14 steht unter der Wirkung einer Feder 15, die den Schieber in die Öffnungsstellung treibt.

Der Aktuator 13 ist mit einer Druckleitung 16 verbunden, die an eine Druckquelle 17 angeschlossen ist. Im Zuge der Druckleitung 16 ist das schnell auslösende Ventil 18 angeordnet, das im Öffnungsfall die Druckleitung 16 entlastet und den Druck aus ihr ablässt. Das Ventil 18 ist ein Schaltventil. Es enthält einen Elektromagneten mit einer Spule 19, in der ein ferromagnetisches Teil 20 angeordnet ist. Das Teil 20 ist mit einem Ventilteller 21 verbunden, welcher eine Öffnung 22 in der Druckleitung 16 verschließt, wenn die Spule 19 erregt ist und das Teil 20 hochzieht. Ist die Spule 19 aberregt, sinkt der Ventilteller 21 aufgrund der Schwerkraft oder durch eine Feder herab und gibt die Öffnung 22 frei. Die Spule 19 ist an eine steuerbare Spannungsquelle 25 angeschlossen. Diese liefert einen Strom, der durch die Spule 19 fließt und das Schaltventil 18 im Schließzustand hält. In diesem Zustand wird der Schieber 10 im Öffnungszustand gehalten. Im Falle eines Stromausfalls oder eines Ausfalls der Druckluft treibt die Feder 15 des Aktuators 13 den Schieber 10 in die Schließstellung.

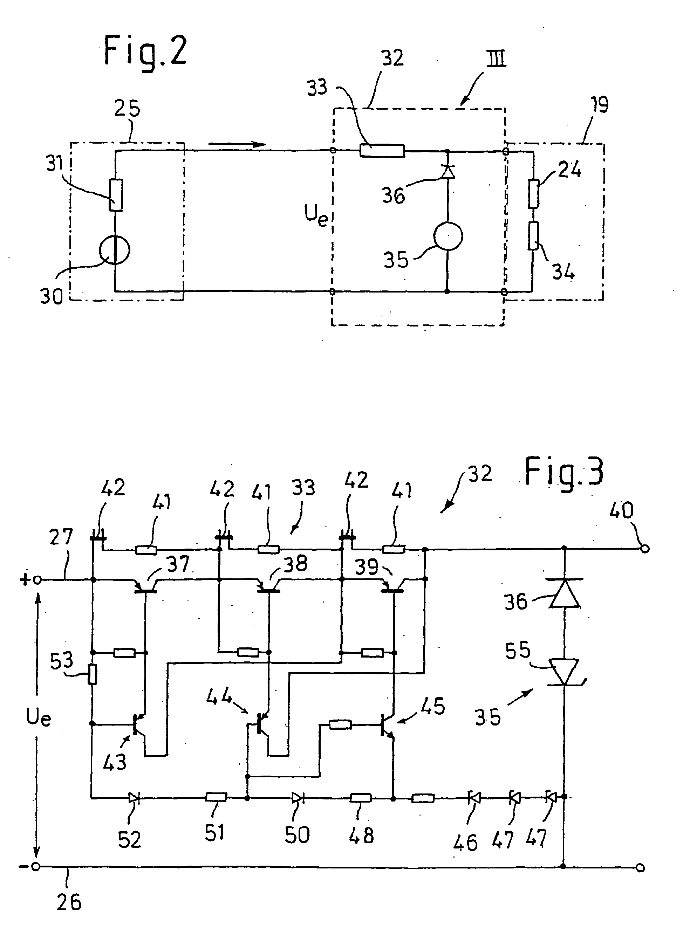

Figur 2 zeigt den Anschluss der Spule 19 an die Spannungsquelle 25. Die Spannungsquelle besteht aus dem Spannungserzeuger 30 und dem Innenwiderstand 31. Ihre Spannung kann zum Abschalten des Stroms von einem hohen Wert auf einen niedrigen Wert verändert werden.

Die Spannungsquelle 25 liefert die Eingangsspannung Uₑ für eine Schaltung 32, die einen spannungsabhängigen Widerstand 33 als Reihenwiderstand enthält, welcher mit der Spule 19 eine an die Spannungsquelle 25 angeschlossene Reihenschaltung bildet. Die Spule 19 besteht aus der Induktivität 34 und dem Reihenwiderstand 24. Der Spule 19 parallel geschaltet ist die Reihenschaltung aus einer Hilfsspannungsquelle 35 und einer Gleichrichterdiode 36. Die Gleichrichterdiode 36 ist invers zu der Richtung des von der Spannungsquelle 25 gelieferten Stromes gepolt, d.h. sie verhindert, dass dieser Strom über die Hilfsspannungsquelle 35 fließt.

Figur 3 zeigt die Schaltung 32 mit dem spannungsabhängigen Widerstand 33. Die Schaltung 32 enthält eine von der Spannungsquelle 25 zur Spule 19 durchgehende Minusleitung 26. An ihrem Eingang steht die von der Spannungsquelle gelieferte Eingangsspannung Uₑ. Der Pluspol 27 ist über mehrere kaskadenartig in Reihe geschaltete Transistoren 37, 38, 39 mit dem Ausgangspol 40 verbunden. Jeder dieser Transistoren ist durch einen Widerstand 41 überbrückt, der in Reihe mit einer Kontaktbrücke 42 geschaltet ist. Jeder der Transistoren 37, 38, 39 wird von einem Hilfstransistor 43, 44, 45 gesteuert. Der Hilfstransistor 45 ist mit seinem Emitter an eine Referenzstrecke 46 aus mehreren Zenerdioden 47 angeschlossen, welche mit der Leitung 26 verbunden ist. Die Referenzstrecke 46 definiert die Schaltspannung Uₛ, bei der die Transistoren 37, 38, 39 in den Sperrzustand gesteuert werden.

Die Referenzstrecke 46 ist an einem Ende mit der Leitung 26 verbunden und am anderen Ende mit jeweils einer Kombination eines Reihenwiderstandes 48 mit einer Diode 50 bzw. einer Kombination eines Reihenwiderstandes 51 mit einer Diode 52.

Die an dem Pluspol 27 anstehende Eingangsspannung Uₑ gelangt über einen Widerstand 53 sowie die Widerstände 51 und 48 und die Dioden 52 und 50 an die Referenzstrecke 46, die die Referenzspannung erzeugt, die von der Spannung Uₑ unterschritten werden muss, um die Hilfstransistoren 43, 44 und 45 in den Sperrzustand zu steuern, wodurch die Transistoren 37, 38 und 39 ebenfalls in den Sperrzustand geschaltet werden.

Während des normalen Betriebs, in dem der Schieber 10 geöffnet gehalten wird, muss das Schaltventil 18 geschlossen bleiben. Dies bedeutet, dass die Spule 19 erregt wird. Dies wird erreicht, indem die Spannungsquelle 25 die volle Eingangsspannung Uₑ erzeugt. Wenn diese an der Schaltung 32 ansteht, sind die Transistoren 37, 38, 39 im leitenden Zustand, so dass die Widerstände 41 von den Transistoren überbrückt werden. Es fließt ein Strom durch die Spule 19, um diese aktiviert zu halten.

Im Falle eines erforderlichen Schnellschlusses des Schiebers 10 wird die Spannung der Spannungsquelle 25 abgesenkt. Daraufhin werden die Transistoren 37, 38, 39 in den Sperrzustand geschaltet, so dass der Strom von der Stromquelle aus nun über die in Reihe geschalteten Widerstände 41 fließt. Der hohe Strom durch die Spule 19 versucht weiter zu fließen und entlädt sich zu der Hilfsspannungsquelle 35, die hier als Zenerdiode ausgebildet ist. Diese erzeugt einen Strom von ihrer Anode über die Gleichrichterdiode 36, den Widerstand 24 und die Induktivität 34. Da diese Strecke niederohmig ist, erfolgt eine schnelle Entladung des Stromes der Spule 19 mit der Folge, dass das Schaltventil 18 nach einer definierten Zeit schnell abfällt. Das Schaltventil hat somit eine definierte und berechenbare Abschaltzeit.

## Patentansprüche

1. Schnell auslösendes Ventil (18), das eine von einer Spannungsquelle (25) gespeiste Spule (19) aufweist,
wobei zwischen der Spannungsquelle (25) und der Spule (19) ein spannungsabhängiger Widerstand (33) vorgesehen ist und der Spule (19) eine Hilfsspannungsquelle (35) parallel geschaltet ist, deren Spannung derjenigen der Spannungsquelle (25) entgegengerichtet ist,
**dadurch gekennzeichnet,**
**dass** der spannungsabhängige Widerstand (33) mehrere kaskadenartig in Reihe geschaltete elektronische Schalter (37, 38, 39) enthält, die jeweils einen Serienwiderstand (41) überbrücken und in den Sperrzustand gesteuert werden, wenn die anliegende Spannung (Uₑ) eine vorgegebene Schaltspannung (Uₛ) unterschreitet.

2. Schnell auslösendes Ventil nach Anspruch 1, **dadurch gekennzeichnet, dass** die Hilfsspannungsquelle (35) aus mindestens einer Zenerdiode besteht.

3. Schnell auslösendes Ventil nach Anspruch 1 oder 2, **dadurch gekennzeichnet, dass** die Hilfsspannungsquelle (35) in Reihe mit einer Gleichrichterdiode (36) parallel zu der Spule (19) geschaltet ist.

4. Schnell auslösendes Ventil nach Anspruch 3, **dadurch gekennzeichnet, dass** die Schaltspannung (Uₛ) durch eine Referenzspannungsstrecke (46) bestimmt wird.

5. Schnell auslösendes Ventil nach Anspruch 3 oder 4, **dadurch gekennzeichnet, dass** jeder der elektronischen Schalter (37, 38, 39) durch einen Hilfstransistor (43, 44, 45) geschaltet wird.

## Claims

1. A quick-acting valve (18) comprising a coil (19) supplied by a voltage source (25),
wherein a voltage-dependent resistor (33) is provided between the voltage source (25) and the coil (19), and an auxiliary voltage source (35) is connected in parallel to the coil (19), the voltage of said auxiliary voltage source (35) being opposite to that of said voltage source (25),
**characterized in that**
the voltage-dependent resistor (33) includes a plurality of electronic switches (37,38,39) connected in series in the form of a cascade, each bridging a series resistor (41) and being driven into the closing state when the voltage (Uₑ) applied falls below a given switching voltage (Uₛ).

2. The quick-acting valve according to claim 1, **characterized in that** the auxiliary voltage source (35) comprises at least one Zener diode.

3. The quick-acting valve according to claim 1 or 2, **characterized in that** the auxiliary voltage source (35) is connected in series with a rectifier diode (36) and in parallel to the coil (19).

4. The quick-acting valve according to claim 3, **characterized in that** the switching voltage (Uₛ) is determined by a reference voltage path (46).

5. The quick-acting valve according to claim 3 or 4, **characterized in that** each electronic switch (37,38,39) is switched by an auxiliary transistor (43,44,45).

## Revendications

1. Soupape à ouverture rapide (18) comprenant une bobine (19) alimentée par une source de tension (25),
une résistance (33) dépendant de la tension étant située entre la source de tension (25) et la bobine (19), et une source de tension auxiliaire (35) étant couplée en parallèle à ladite bobine (19), dont la tension est opposée à celle de la source de tension (25),
**caractérisée en ce que**
ladite résistance (33) dépendant de la tension comprend plusieurs interrupteurs électroniques (37, 38, 39) couplés en série de manière d'une cascade, chaque interrupteur pontant une résistance de série (41) et étant commandé dans l'état bloqué si la tension (Uₑ) appliquée sous-dépasse une tension de coupure (Uₛ) donnée.

2. Soupape à ouverture rapide selon la revendication 1, **caractérisée en ce que** la source de tension auxiliaire (35) est formée d'au moins une diode de Zener.

3. Soupape à ouverture rapide selon la revendication 1 ou 2, **caractérisée en ce que** la source de tension auxiliaire (35) est couplée en série avec une diode redresseuse (36) et en parallèle à la bobine (19).

4. Soupape à ouverture rapide selon la revendication 3, **caractérisée en ce que** la tension de coupure (Uₛ) est déterminée par une route de tension référentielle (46).

5. Soupape à ouverture rapide selon la revendication 3 ou 4, **caractérisée en ce que** chaque interrupteur électronique (37, 38, 39) est commuté par un transistor auxiliaire (43, 44, 45).
